# EUROPEAN PATENT SPECIFICATION

(11) **EP 3 497 609 B1**
(45) Date of publication and mention of the grant of the patent: **07.10.2020**
(21) Application number: 17755397.1
(22) Date of filing: 11.08.2017
(51) Int. Cl.: G06F 16/9032, G06F 16/903, G06N 20/00, G06Q 50/00, G06F 21/55, H04L 29/06

(54) **DETECTING SCRIPTED OR OTHERWISE ANOMALOUS INTERACTIONS WITH SOCIAL MEDIA PLATFORM**
ERKENNEN VON GESCRIPTETEN ODER ANDERWEITIG ANORMALEN INTERAKTIONEN MIT EINER SOZIALEN MEDIENPLATTFORM
DÉTECTION D'INTERACTIONS SCRIPTÉES OU AUTREMENT ANORMALES SUR UNE PLATE-FORME DE RÉSEAU SOCIAL

(30) Priority: 11.08.2016 US 201662373946 P
(43) Date of publication of application: 19.06.2019
(73) Proprietor: Twitter, Inc., San Francisco, CA 94103 (US)
(72) Inventor: WEI, Wendy, San Francisco, California 94103 (US); SHEN, Siwei, San Francisco, California 94103 (US)
(74) Representative: Derry, Paul Stefan
(86) International application number: PCT/US2017/046569
(87) International publication number: WO 2018/031921

(56) References cited:
- US-A1- 2015 350 174
- US-A1- 2016 011 732
- Todd Fredrich Pearson: "RESTful Service Best Practices RESTful Service Best Practices Recommendations for Creating Web Services", , 2 August 2013 (2013-08-02), XP055205766, Retrieved from the Internet: URL:www.RestApiTutorial.com [retrieved on 2015-07-31]

## Description

### BACKGROUND

Due to the popularity of social media, many people are interacting with, and consuming content from, a variety of social networks that are available electronically. Some social media platforms require that a person go through a formal signup process to register themselves before they can engage with the services or other functionality offered. For example, the person can create an account for that particular social media platform.

As with many other online activities, social media platforms are being subjected to different forms of misuse. For example, spammers are interested in spreading their message or other content to as many people as possible, and they have been known to use software (e.g., a script) to try to automatically create accounts with a social media platform. Such illicit automated creation of numerous accounts within a short time period can serve as an attempt to maximize the number of people that can be reached by the spamming campaign before the platform can act against it and terminate or deactivate the account. Moreover, spam messaging is not the only undesirable consequence that can follow when social media accounts are created by scripts being executed. Rather, such fake accounts are often associated with harassment or abuse of other participants, or other violations of the policies applicable to the social media platform.

US 2015/350174 A1 describes an application programming interface (API) risk assessment equipment. An API transaction request is received from an application processed by a source node. A risk assessment score is generated based on comparison of content of the API transaction request to content of earlier API transaction requests. The risk assessment score indicates trustworthiness of the API transaction request. Deliverability of the API transaction request to a destination node for processing is controlled based on the risk assessment score.

### SUMMARY

This specification provides a method as recited in claim 1.

Implementations can include any or all of the following features. Applying the API call sequence model can include an evaluation of whether the received API call sequence is missing a particular API call of the frontend component. Some of the training API call sequences can correspond to valid account creation requests and others of the training API call sequences can correspond to invalid account creation requests. The particular API call can be identified for use in the evaluation based on the particular API call having a greater frequency of occurrence for the valid account creation requests than for the invalid account creation requests. The method can further include, in response to determining that the received API call sequence is missing the particular API call of the frontend component, evaluating whether the received API call sequence is missing another particular API call of the frontend component. Applying the API call sequence model can include evaluating the timing of the API calls. Evaluating the timing of the API calls can include determining whether a temporal separation of the API calls is less than a threshold. Evaluating the timing of the API calls can include determining whether a temporal separation of the API calls is randomized. Applying the API call sequence model can include counting the API calls in the received API call sequence.

Multiple API call sequences can be received, the multiple API call sequences corresponding to respective account creation requests. The method can further include storing the received API call sequences in a log, and evaluating the log to determine whether any of the received API call sequences are essentially identical to each other. The account can be created in response to the account creation request, and the method can further include: receiving engagement data regarding the account, the engagement data reflecting use of the frontend component to interact with the social media platform; applying an engagement model to the received engagement data, the engagement model generated by providing training engagement data to the machine learning component; and in response to the application of the engagement model indicating that the use of the frontend component is anomalous, taking at least one action with regard to the account.

Applying the API call sequence model can include determining a score for the received API call sequence. The application of the API call sequence model can indicate that the received API call sequence is anomalous in response to the determined score not meeting a threshold for account creation normalcy. The connection between the API calls and the creation of the account creation request can include that at least one of the API calls was registered by the frontend component during a predefined period of time after the account generation request was generated. Taking the at least one action can include attempting to contact a person associated with the account generation request, and determining whether the account generation request was generated by a script interacting with the frontend component.

The method can further include receiving additional training API call sequences after applying the API call sequence model to the received API call sequence; generating an updated API call sequence model by providing the additional training API call sequences to the machine learning component; receiving another account creation request for the social media platform after generating the updated API call sequence model; applying the updated API call sequence model to the received other API call sequence; and in response to the application of the updated API call sequence model indicating that the received other API call sequence is anomalous, taking at least one action with regard to the other account creation request, or with regard to an other account created in response to the other account creation request. The method can further include applying the updated API call sequence model to a previous account creation request, including at least the received account creation request.

The specification also provides a computer program as recited in claim 13.

The specification further provides a computer systemas recited in claim 14..

Implementations can include any or all of the following features. In applying the API call sequence model the bot can evaluate the timing of the API calls. In evaluating the timing of the API calls the bot can determine whether a temporal separation of the API calls is less than a threshold. In evaluating the timing of the API calls the bot can determine whether a temporal separation of the API calls is randomized.

The details of one or more implementations are set forth in the accompanying drawings and the description below. Other features will be apparent from the description and drawings, and from the claims.

### BRIEF DESCRIPTION OF DRAWINGS

FIG. 1 shows an example of a system that can detect anomalies in interactions with a social media platform.
FIG. 2 schematically shows an example of analysis of an API call sequence.
FIG. 3 schematically shows an example of logging and analysis of interactions with a social media platform.
FIG. 4 shows an example of a system that performs analysis and creates a log.
FIG. 5 shows an example of a system that creates a machine learning model.
FIG. 6 shows an example of checking for anomalies in an API call sequence.
FIG. 7 shows an example of a system that can train a machine learning model and apply the model to detect anomalies.
FIG. 8 shows an example of a process.
FIG. 9 shows another example of a process.
FIG. 10 shows an example of a distributed computer device that can be used to implement the described techniques.

Like reference symbols in the various drawings indicate like elements.

### DETAILED DESCRIPTION

This disclosure describes systems and techniques for detecting anomalous interactions with a social media platform. In some implementations, a machine learning model can be trained based on valid and/or invalid examples of signup sequences, and the model can then be applied to determine whether one or more accounts were established illegitimately. For example, a sequence of application programming interface (API) calls for an account can be analyzed using the machine learning model. If the API call sequence shows signs of anomaly, further investigation can be performed and/or the account can be terminated.

Implementations can provide a technical solution to the situation that spammers or other online abusers gain unwanted access to a social media platform and its participants by using scripts or other automated procedures to go through the account signup process. For example, having fake accounts on a social media platform can lead to unwanted spamming or other abuse of legitimate users and/or to degradation in system performance due to excessive illegitimate traffic. As another example, implementations can provide the technical advantage of making the signup process more streamlined because validation measures (to ensure that the user is a human being and not a script) need only be applied if an indication of anomaly has been detected.

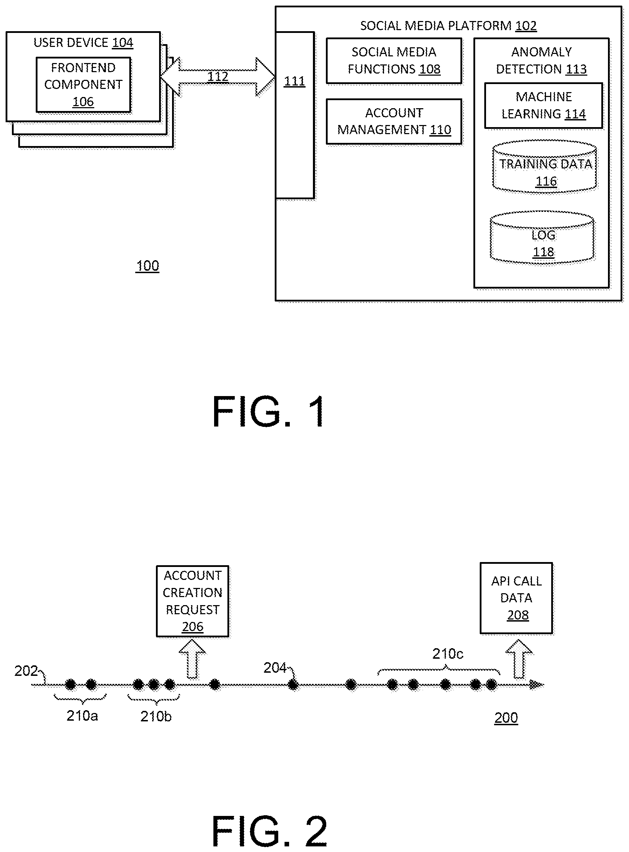

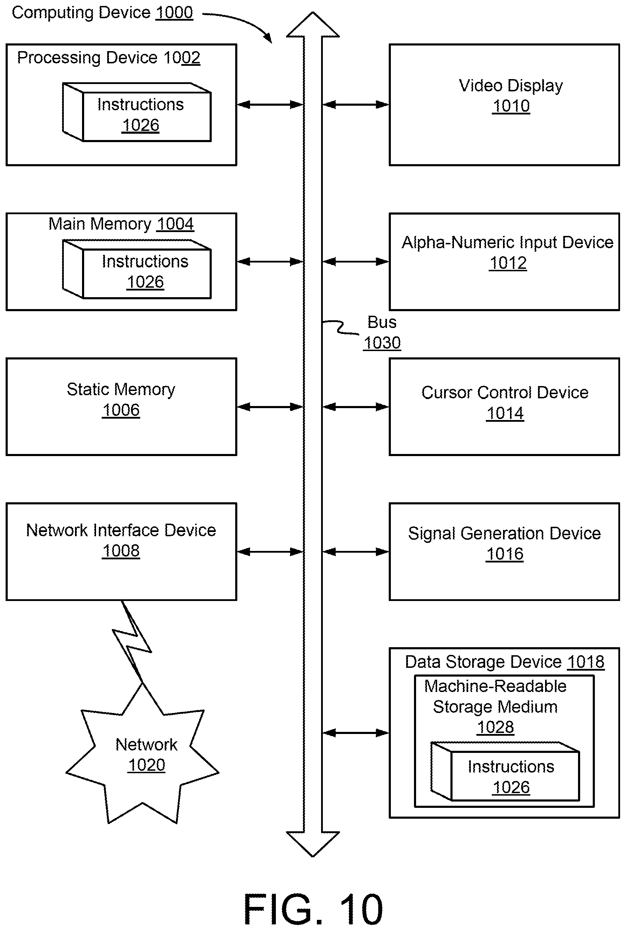

FIG. 1 shows an example of a system 100 that can detect anomalies in interactions with a social media platform 102. Some components of the system 100 are illustrated as boxes for simplicity. A box can represent one or more components of software, hardware, firmware, or combinations thereof. For example, one or more instances similar or identical to the device shown in FIG. 10 can be used for implementing the system 100. In some implementations, two or more of the components can be combined into a common component, and/or, one or more of the shown boxes can be distributed over two or more components.

The system 100 includes one or more user devices 104 that can communicate with the social media platform 102. The user devices 104 can include any type of device, including, but not limited to, a personal computer, a laptop, a handheld electronic device, a smartphone, a wearable electronic device, a tablet device, and combinations thereof.

The user device 104 includes one or more frontend component 106 for the social media platform 102. The frontend component 106 can allow the user to register with the social media platform 102 and to engage in activities or interaction with other users by way of the social media platform 102. In some implementations, the frontend component 106 is a software application (e.g., an "app") that is being executed on a smartphone. For example, the frontend component 106 can be obtained from an online provider of software programs and downloaded to, and installed on, the user device 104.

The social media platform 102 can facilitate interaction with users or prospective users in one or more ways. Here, the social media platform 102 provides one or more social media functions 108. In some implementations, the social media functions 108 can include one or more ways of distributing messages or other content between two or more of the user devices 104. For example, a news-and-social-network service can be provided that enables users to post and interact with messages using the frontend component 106.

The social media platform 102 may require that an account be created before a user can engage with one or more of the social media functions 108. Here, the social media platform 102 includes an account management module 110 that can manage the process of creating new accounts and maintaining created accounts. In some implementations, the frontend component 106 can be configured to allow the user to enter therein information required for the signup process, and this information (and optionally additional information) can then be provided to the account management module 110 for processing.

The account management module 110 can receive information 112 from the frontend component 106. The information can be sent as a single communication or as multiple communications. The information here includes an account creation request. In some implementations, the social media platform 102 can include an interface 111 that facilitates communication with the user device(s) 104. The interface 111 can facilitate communications over one or more networks, including, but not limited to, a private network or the internet. For example, the interface 111 allows the social media platform 102 to receive account creation requests and API call sequence data from the frontend components 106 on the respective user devices 104.

In principle, the account management module 110 can accept the request if the required information has been provided, and create a new account as a result. If some required information has not been provided, or if another basis exists for not opening a new account, the account management module 110 can deny the request or request additional information. For example, such measures may be triggered if the account creation request is deemed to be anomalous.

The social media platform 102 can include an anomaly detection module 113. The anomaly detection module 113 can be used for detecting one or more types of anomaly with regard to how the user devices 104 interact with the social media platform 102. In some implementations, the anomaly detection module 113 can include one or more machine learning components 114 that are trained to detect anomalous behavior. The machine learning component 114 can be trained using one or more sets of training data 116. For example, training data 116 can include valid and/or invalid examples of interactions, such that the machine learning component 114 can create a model of valid and/or invalid behavior. For example, invalid behavior can include using a script that engages with the frontend component 106 to perform the signup procedure. The social media platform 102 can collect and store a log 118 in the anomaly detection module 113. For example, the log can include account creations requests and/or other interactions created by the frontend component 106.

In some implementations, the anomaly detection module 113 can analyze one or more interactions with the frontend component 106. The frontend component can be designed to have a number of application programming interfaces (APIs). The APIs can relate to any or all interactions that a user can have with the frontend component 106. The signup procedure by which the user generates the account creation request is defined in terms of APIs that reflect what information the user can enter and submit to the social media platform 102. As another example, other interactions-such as whether the user places a cursor or a screen, or performs a search, or visits a home page, or uploads a picture, or clicks a social media message-can correspond to respective APIs and accordingly be detected. In particular, the invocation of an API can be referred to as an API call, and two or more such API calls that take place on a particular user device-that is, that are registered by the same frontend component 106-can be referred to as an API call sequence. In some implementations, the anomaly detection module 113 can analyze one or more API call sequences to detect anomalies. For example, the anomaly detection module 113 can detect whether the API call were made by a script executing on the user device 104, as opposed to by a human interacting directly with the frontend component 106.

One or more types of various machine learning approaches can be used in the machine learning component 114. In some implementations, such approaches can include one or more of Markov models, logistic regression, decision tree analysis, random forest analysis, neural nets, and combinations thereof. Generally, machine learning is the field where a computer learns to perform classes of tasks using the feedback generated from experience or data that the machine learning process acquires during computer performance of those tasks. In supervised machine learning, the computer can learn one or more rules or functions to map between example inputs and desired outputs as predetermined by an operator or programmer. Labeled data points can then be used in training the computer. Unsupervised machine learning can involve using unlabeled data, and the computer can then identify implicit relationships in the data, for example by reducing the dimensionality of the data set.

One type of machine learning approach that can be used in the machine learning component 114 is a classifier. Objects can be labeled-for example, by a human- and be used for generating a training set. The training set can form at least part of the training data 116. For example, a subsampling and/or reweighing of the labeled objects can be performed to generate the training set. The training set based on the labeled objects can be provided to a classifier to train the classifier as to relationships within the training set. This can be an iterative process where the classifier is re-trained using objects that have been labeled according to an output of the classifier. Once trained, the classifier can receive one or more unlabeled objects and apply the trained machine learning model thereto, in order to arrive at an output of a proper labeling.

Thus, the system 100 can be used to perform one or more methods or processes relating to anomaly detection with regard to a social media platform. For example, the social media platform 102 can receive an account creation request from the frontend component 106 via the information 112. The intended use of the frontend component 106 is that a human should be the one using the frontend component 106 to establish an account for themselves on the social media platform 102 and then interact with others by way of the social media functions 108. However, as indicated above, it can happen that illicit signup attempts are made by executing a script on the user device 104, the script interacting with the frontend component 106 and invoking some or all of its APIs. Thus, it can be desirable to determine whether the account creation request was generated by a human or in an automated way, such as by an executed script.

The social media platform 102 can therefore receive, within the information 112 sent from the frontend component 106, an API call sequence associated with the account creation request. The API call sequence can reflecting API calls registered by the frontend component 106 in connection with creation of the account creation request. The API call sequence can also reflect timings of the registered API calls. The social media platform 102 can store the account creation request in the log 118.

The machine learning component 114 can apply an API call sequence model to the received API call sequence. Such an API call sequence model may have been generated by providing training API call sequences-for example, from the training data 116-to the machine learning component 114. The API call sequence model can be different depending on the type of client or on the implementation environment. The API call sequence model can determine whether the received API call sequence is consistent with the API call sequence that would be expected from a human user, or whether it has any anomaly that suggests it may have been created by execution of a script.

That is, the anomaly detection module 113-for example, the machine learning component 114-can indicate whether the received API call sequence is anomalous. In response to the application of the API call sequence model indicating that the received API call sequence is anomalous, the social media platform 102 (e.g., the anomaly detection module 113 thereof) can take at least one action with regard to the account creation request.

One or more types of remedial actions can be performed after an anomaly is detected. For example, the user can be electronically prompted for further information, as schematically indicated by part of the information 112 also being sent to the user device 102. As another example, the anomaly detection module 113 can initiate a phone challenge to the registering user, where a phone call is placed to gather more information. As such, taking the at least one action can include attempting to contact a person associated with the account generation request, and determining whether the account generation request was generated by a script interacting with the frontend component 106. The action(s) taken in response to the detected anomaly can be performed before any account is created for the received account creation request. That is, the processing can be performed essentially in real time before the account creation request is accepted or rejected. As another example, if an account has already been created in response to the account creation request, then the remedial measures can be taken with regard to the created account. For example, the account can be terminated or placed in a restrictive mode.

The machine learning module 114 can be updated. For example, if the frontend component 106 is modified so as to introduce an additional API or remove an existing one, it may be necessary or desirable to retrain the machine learning module 114. This can allow the anomaly detection module 114 to change its analysis in one or more regards, for example so as to accept an API call sequence as normal that might earlier have been flagged as anomalous, and/or to flag an API call sequence as anomalous that might earlier have been considered normal. As such, the machine learning module 114 can receive additional training API call sequences (e.g., stored in the training data 116) after the machine learning module 114 has been trained. The machine learning module 114 can then be trained using (also) the new training data 116. An updated API call sequence model can be generated by providing the additional training API call sequences to the machine learning module 114. At a later time, another account creation request for the social media platform can be received after the updated API call sequence model is generated. The updated API call sequence model can be applied to the received other API call sequence and at least one action can be taken if necessary or desirable.

Backfill processes can be performed. For example, when the machine learning component 114 has been retrained, it can be applied not only to future account creation requests, but also to one or more requests in the log 118. As such, an account creation request that was already analyzed using the previous API call sequence model, and then found to be legitimate, can again be evaluated using the updated API call sequence model.

Some implementations can analyze whether any anomalies exist in how a user of an already created account interacts with the social media platform 102. For example, even if the account was originally created in response to a human going through the signup process, the resulting account may later have been compromised. The user's engagement with the social medial function(s) 108 can therefore be analyzed to determine whether they are consistent with the user being a human, or whether they appears to be the result of an automated process (e.g., a script or other software) interacting with the frontend component 106. That is, this processing takes place after the account has been created. The machine learning component 114 can then use an engagement model to detect anomalies.

The social media platform 102 can receive engagement data regarding the account, such engagement data reflecting use of the frontend component 106 to interact with the social media platform 102. The machine learning component 114 can applying the engagement model to the received engagement data. Similar to the API call sequence model exemplified above, the engagement model may have been generated by providing training engagement data (e.g., from training data 116) to the machine learning component 114. The engagement model will indicate whether the engagement data is normal or appears to be anomalous in one or more ways (e.g., by being the result of scripted or otherwise automated interactions). If an anomaly is detected, one or more actions can be taken with regard to the account.

Examples herein mention that a machine learning model may be trained to detect what is anomalous, and this can be referred to as anomaly detection. In some implementations, however, the machine learning model can instead be trained to recognize that which is normal, and this can then be referred to as signature detection. As such, when an API call sequence does not fit any applied signature-detection model, the system can infer that the API call sequence is not a normal one and accordingly flag it as anomalous. Yet other implementations can apply both some form of anomaly detection and some form of signature detection.

FIG. 2 schematically shows an example of analysis of an API call sequence 200. Some components of FIG. 1 will be mentioned for illustrative purposes. The API call sequence 200 is here illustrated using a timeline 202. The API call sequence 200 includes individual API calls 204 marked on the timeline 202. Each of the API calls 204 corresponds to an API call that was registered by the frontend component 106 on the user device 104 (FIG. 1). One or more of the API calls 204 can correspond to the user clicking a button on a graphical user interface of the frontend component, or entering text in a field, or making a selection, or simply placing a cursor on the screen, to name just a few examples. At some point in time, an account creation request 206 is generated by the frontend component 106 and sent by the user device 104 to the social media platform 102. One or more of the API calls 204 can be collected after the account creation request 206 is generated. For example, API call data 208 can later be transmitted by the frontend component 106 to the social media platform 102. As such, the connection between the API calls 204 and the creation of the account creation request 206 can be that at least one of the API calls 204 was registered by the frontend component 106 during a predefined period of time after the account generation request 206 was generated.

When the anomaly detection module 113 applies the API call sequence model to the API call sequence 200, the anomaly detection module 113 can evaluate one or more aspects of the API call sequence 200, including, but not limited to, the length of the API call sequence 200, the number of the API calls 204 therein, the timing of the API calls 204, or combinations thereof.

Applying the API call sequence model can include evaluating the timing of the API calls 204. In some implementations, the anomaly detection module 113 can determine whether a temporal separation of the API calls 204 is less than a threshold. Here, temporal separations 210a-c between individual ones of the API calls 204 are schematically marked for illustrative purposes. If the temporal separations 210a-c are all identical, the API call sequence model can flag this as an anomaly. If the temporal separations 210a-c are all less than a threshold, the API call sequence model can flag this as an anomaly. If the temporal separations 210a-c are all randomized, the API call sequence model can flag this as an anomaly.

The API calls 204 can be counted to determine whether the signup process is anomalous. For example, it can be known from analysis that human users make on the order of 10000 API calls per minute during a normal signup procedure, whereas a typical automated signup script makes perhaps 10 API calls per minute. As such, the machine learning component 114 can use this metric to determine whether the received API call sequence is anomalous.

The anomaly detection module 113 can determine a score for the received API call sequence 200. Account creation normalcy can then be evaluated based on whether the score meets a threshold. For example, the number of the API calls 204, the timing of the API calls 204, and/or other factors relating to potential abnormality, can be assigned numerical values using one or more metrics and then compiled into a score for the account creation request.

Anomalous behavior can be detected also or instead by looking at more than one account creation request. For example, a spike in signups can be a sign of anomalous behavior. In some implementations, the anomaly detection module 113 can receive multiple API call sequences, store them in the log 118, and determine whether any of them are essentially identical to each other. For example, if an automated signup script is used repeatedly (to create separate accounts) it may give rise to essentially identical API call sequences each time. As such, this can be a sign that two or more signups are illicit.

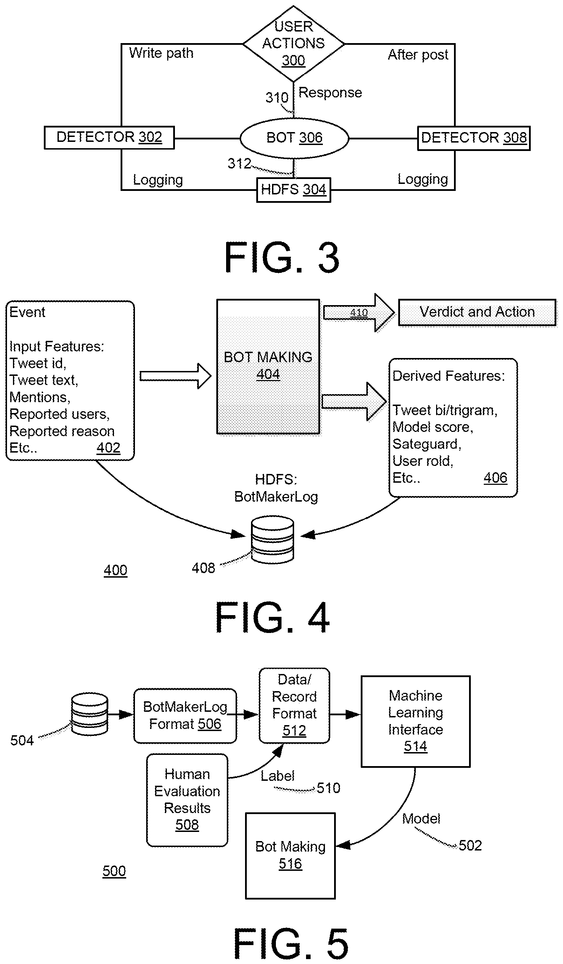

FIG. 3 schematically shows an example of logging and analysis of interactions with a social media platform. A user actions component 300 here represents the actions that can be undertaken using a frontend component, such as to create an account for a social media platform and to engage with one or more other users and their contents via the platform. For example, a detector component 302 can receive an account creation request from the user, analyze the account creation request and related metadata, such as using a trained machine learning model, and at the same time store the account creation request and related model in a Hadoop Distributed File System (HDFS) 304, and invoke a bot 306 to score users in real time and take actions (e.g., through phone challenges). For an account that has been created, a detector 308 can receive one or more interactions from the user actions component 300 (e.g., a message to one or more other social media users). The detector can analyze the interaction, such as using the same or a different machine learning model, and at the same time log the received information and model in the HDFS 304 and trigger the bot to take action with regard to a user. A response path 310 indicates that the bot 306 can take one or more actions with regard to the user actions component 300, depending on the outcomes of the analyses and models. A connection 312 between the bot 306 and the HDFS 304 indicates that the bot 306 can read metadata and the model(s) from the HDFS 304, and/or log results of bots to the HDFS 304.

FIG. 4 shows an example of a system 400 that performs analysis and creates a log. An event 402 can be provided as input to a bot making component 404. For example, the input can include an identifier of a social media message, a text of a social media message, a mention of a social media message, a reported user of a social media platform, a reported reason for an anomaly flagging on a social media platform, or combinations thereof. The bot making component 404 can analyze the event(s) 402 and generate one or more derived features 406. For example, the derived features can include a bi- or tri-gram of a social media message, a model score of a social media message, a safeguard relating to a social media message, a user role for a social media platform, and combinations thereof. The derived features 406 and/or the event 402 can be stored in a log 408. The bot making component 404 can also generate one or more verdicts and actions 410 regarding input it receives.

FIG. 5 shows an example of a system 500 that creates a machine learning model 502. The system 500 includes a log 504. For example this can include valid and invalid examples of user interactions, such as account creation requests and/or engagements with a social media platform. Some or all contents of the log 504 can be subjected to formatter 506. Human evaluation results 508 can be provided, such as to provide examples of valid and/or invalid interactions. This can provide one or more labels 510. The labels 510 and the data from formatter 506 can be provided as data/record format 512. For example, this can be the format required by a machine learning infrastructure 514. For example, the machine learning infrastructure 514 can be configured to take labeled data as input, analyze the data in one or more iterations, and generate the machine learning model 502 as an output. A bot 516 can receive the machine learning model 502 from the machine learning infrastructure 514. For example, the bot 516 can apply the machine learning model 502 to received user interaction data to detect indications of anomalous behavior.

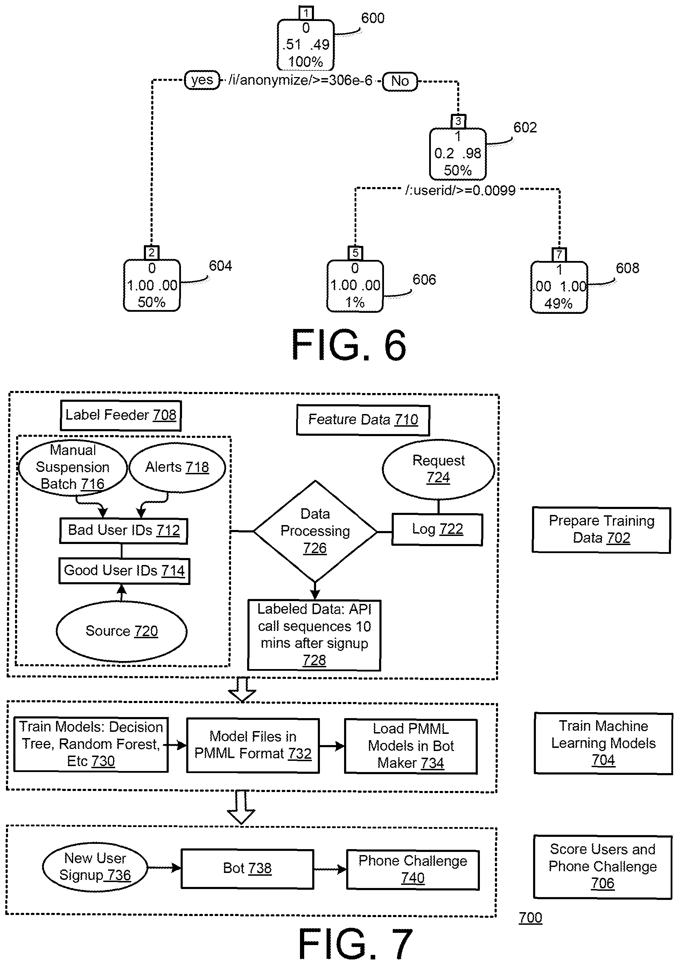

FIG. 6 shows an example of checking for anomalies in an API call sequence. Through analysis of valid and invalid examples of API call sequences (e.g., those relating to the making of an account creation request), it may be known that certain API calls occur often in the valid examples, and seldom in the invalid examples. For example, such particular API calls may be those that a user very often makes in connection with a signup procedure, but that a scammer probably does not think about including in the script when trying to deceive the signup functionality. For example, the particular API calls may frequently be made in the first, say, two hours after signing up for the social media platform. As such, the valid example(s) may have a greater frequency of occurrence of the API call(s) than the invalid example(s). If the particular API call is one that is not exposed to users, but rather is an internal one to the frontend component and the social media platform, this can make it very difficult or impossible for a spammer to adapt their script to artificially create such an API call. As such, applying the API call sequence model can include an evaluation of whether the received API call sequence is missing a particular API call of the frontend component.

In this example, two API calls have been identified as suitable candidates for this analysis. For example, several API call endpoints can be identified as occurring frequently in valid user data, but almost never in invalid user data. From that information, a machine learning model can be trained, such as by way of decision tree training, to identify one of the API calls as the most significant feature, and one or more other API calls as a secondary (or later) feature. Here, the API call "i/anonymize" corresponding to a request for anonymization is represented by a feature 600 and the API call "/:userid" corresponding to a visit to a user profile page is represented by a feature 602. The feature 600 here indicates that the false positive rate on the training dataset is almost zero while maintaining almost 100% recall, with cross-validation implemented. That is, if the situation at the element 600 is that the API call "i/anonymize" is present in the API call sequence, then, at feature 604, the API call sequence can be deemed valid as far as the machine learning model can tell. In principle, a valid API call sequence can lead to the user being granted an account as requested. If other information about the API call sequence later becomes available, this assessment can be reconsidered or changed. To ensure that this approach does not lead to over-fitting, one can test the method on, say, everyone who used a particular signup mode (e.g., a smartphone) during a particular time period.

If the API call "i/anonymize" is not present in the API call sequence at the feature 600, then the API call "/:userid" can be tested at the feature 602. Similarly to feature 600 above, if this API call is present in the API call sequence at feature 602, then, at feature 606, the machine learning model can deem the API call sequence to be valid. On the other hand, if this API call is not present in the API call sequence at feature 602, then, at feature 608, the machine learning model can deem the API call sequence to be invalid.

FIG. 7 shows an example of a system 700 that can train a machine learning model and apply the model to detect anomalies. In some implementations, the system 700 can be considered as operating according to at least three phase: a prepare training data phase 702, a train machine learning models phase 704, and a score users and phone challenge phase 706. In the prepare training data phase 702, the system 700 can include a label feeder aspect 708 and a feature data aspect 710. In the label feeder aspect 708, the system 700 can include a bad user IDs collection 712 and a good user IDs collection 714. This can be the result of performing clustering on user IDs. The bad user IDs collection 712 can include user IDs known or strongly suspected to be the result of scripted signups, whereas the good user IDs collection 714 can include user IDs known or believed to correspond to human users. For example, the bad user IDs collection 712 can be generated based on a manual suspension batch 716 of user IDs and/or on alerts 718 which may have been generated based on behavior believed to be generated by software. The good user IDs collection 714 can be generated based on one or more sources 720, which may identify user IDs that have earned credibility based on observed behavior. That is, the label feeder aspect 708 can provide user IDs (good ones and bad ones) that can be used for labeling data relating to the respective users, such as their API call sequences.

In the feature data aspect 710, data such as client-side features, user behaviors, email addresses, usernames, internet protocol (IP) addresses, and combinations thereof, can be involved. Here, the system 700 can gain access to a frontend log 722. In some implementations, the frontend log 722 is a log of data collected from frontend components that have been executed on respective user devices. For example, the data can include API call sequences. The frontend log 722 can be populated with data based on one or more requests 724. For example, a social media platform can request data collected by the respective frontend components.

The system 700 can prepare jobs for data processing 726. In some implementations, this can be done using a framework (e.g., Apache Hadoop) for MapReduce processing. For example, a so-called scalding job involves the Cascading abstraction layer for Hadoop, which can be implemented by way of an API using the Scala programming language. The data processing 726 can result in one or more labeled data sets 728. For example, the labeled data set 728 can include API call sequences collected until 10 minutes after signup (e.g., the account creation request), labeled with the bad user IDs 712 and the good user IDs 714.

In the train machine learning models phase 704, the system 700 can include a train models aspect 730. Any machine learning approach can be used to train one or more models based on the labeled data set(s) 728. In some implementations, decision trees and/or random forest analysis can be used. Model files 732 are generated based on the train models aspect 730. In some implementations, the model files use a markup language format. For example, predictive model markup language (PMML) format can be used. A loading phase 734 involves loading the model(s) into a bot making component.

In the score users and phone challenge phase 706, the system can gather one or more new user signups 736. In some implementations, a social media platform can receive the new user signup(s) 736 from the frontend(s) on one or more user devices. For example, the score users and phone challenge phase 706 can serve as an anomaly detection module for the social media platform.

The new user signup(s) 736 and the model files 732 are provided to a bot 738 that is configured to apply the trained model of the model files 732 to the user signup(s) 736. In some implementations, the application of the trained model will cause a particular user signup to either be flagged as anomalous or not. When the user signup is flagged as anomalous, one or more actions can be taken. For example, the system 700 can cause a phone challenge 740 to be performed, wherein the system attempts to contact the user by phone to verify that the signup was not performed by software being executed.

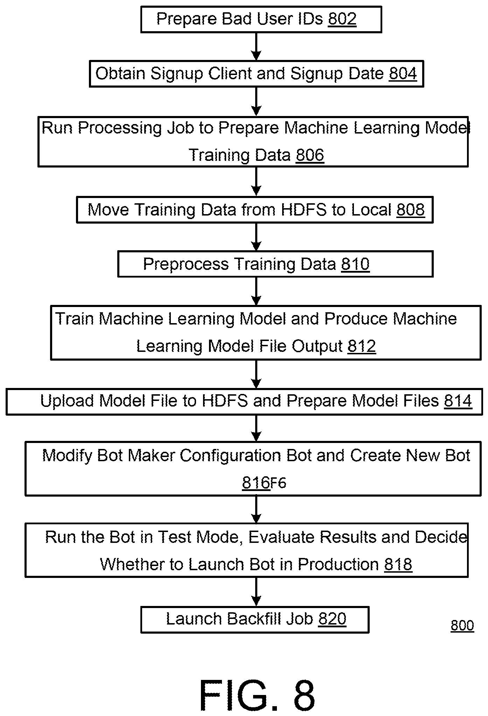

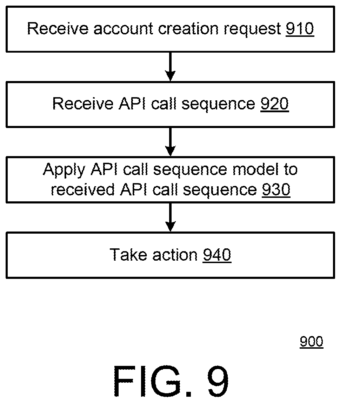

FIG. 8 shows an example of a process 800, and FIG. 9 shows an example of a process 900. Either or both of the processes can be performed by one or more processors executing instructions stored in a computer readable medium. In some implementations, more or fewer operations can be performed. Two or more operations can be merged into a common step, and/or one or more steps can be split up into multiple operations.

At 802, one or more bad user IDs can be prepared. In some implementations, this can be for the purpose of labeling data (e.g., user interaction data) that is to serve as examples of anomalous behavior. For example, the system 700 (FIG. 7) can prepare the bad user IDs collection 712.

At 804, signup client and signup date can be obtained. In some implementations, this information is obtained only for those bad user IDs that were prepared at 802. For example, information can be obtained from a log of API call data (e.g., log 722 in FIG. 7).

At 806, a processing job can be run to prepare machine learning model training data. In some implementations, the processing job 726 (FIG. 7) can be run. For example, the processing can label API call sequence data with the bad user IDs.

At 808, training data can be moved from a HDFS to a local resource. In some implementations, the system 700 (FIG. 7) can move the labeled data 728 from the prepare training data phase 702 to the train machine learning models phase 704.

At 810, the training data can be preprocessed. In some implementations, this can involve executing a script that preprocesses the data. In some implementations, preprocessing of training data includes applying statistical and data science techniques. For example, this can include examining training data quality and cleaning up the data to ensure good model quality, and/or performing exploratory data analysis (EDA) to visualize and understand the structure of the data. Based on results of the EDA, it can be possible to recommend the best models which could fit the data. As other examples, preprocessing can additionally or alternatively include filtering out noise, missing data and outliers, and/or down-sampling or over-sampling data to get a balanced dataset for training.

At 812, a machine learning model can be trained, and machine learning model file output can be produced. In some implementations, this can be done in the train machine learning models phase 704 (FIG. 7) of the system 700.

At 814, a model file can be uploaded to the HDFS and model files can be prepared. In some implementations, the system 700 (FIG. 7) can do this in the loading phase 734.

At 816, a bot making component's configuration bot can be modified and a new bot can be created. In some implementations, the bot 738 (FIG. 7) can be created. For example, the new bot is created so as to have the ability to apply an API call sequence model to a received API call sequence, in order to determine whether any anomaly exists in the API calls.

At 818, the bot can be run in test mode, the results can be evaluated, and a decision can be made whether to launch the bot in production. For example, this can be a preliminary step performed in order to determine whether a bot is sufficiently reliable to be applied to actual user interactions with a social media platform.

At 820, a backfill job can be launched. In some implementations, user interaction data that has been collected previously (e.g., in a log) can be processes in the backfill job to determine whether any of those user interactions show signs of being anomalous according to the machine learning model that has been generated using the process 800. For example, the log can contain API call sequences that were evaluated using an earlier version or iteration of the machine learning model, and that should now be reevaluated according to the principles of the newly created machine learning model.

Turning now to FIG. 9, at 910 of the process 900 an account creation request can be received in a computer system. The account creation request can be for a social media platform, and may have been created and sent to the computer system using a frontend component. For example, with reference to FIG. 1, the frontend component 106 can send, by way of information 112 being received at interface 111, an account creation request to the social media platform 102.

At 920, an API call sequence can be received. The API call sequence can be received from the frontend component and can reflect API calls registered by the frontend component in connection with creation of the account creation request. The API call sequence can also reflect timings of the registered API calls. For example, with reference to FIG. 1, the social media platform 102 can, via the interface 111, receive the information 112 from the user device 104, which information 112 can include the API call logs registered by the frontend component 106.

At 930 the API call sequence model can be applied to the received API call sequence. The API call sequence model may have been generated by providing training API call sequences to a machine learning component. For example, with reference to FIG. 1, the anomaly detection module 113 can cause the machine learning component 114 to apply the machine learning model based on the training data 116 to some or all of the contents in the log 118.

At 940, one or more actions can be taken. In response to the application of the API call sequence model indicating that the received API call sequence is anomalous, at least one action with regard to the account creation request, or can be taken with regard to an account created in response to the account creation request. For example, with reference to FIG. 1, if the machine learning component 114 determines that the received API call sequence is anomalous, then the anomaly detection module 113 (or the account management module 110, to name another example) can cause a phone challenge to be made.

FIG. 10 illustrates a diagrammatic representation of a machine in the example form of a computing device 1000 within which a set of instructions, for causing the machine to perform any one or more of the methodologies discussed herein, may be executed. The computing device 1000 may be a mobile phone, a smart phone, a netbook computer, a rackmount server, a router computer, a server computer, a personal computer, a mainframe computer, a laptop computer, a tablet computer, a desktop computer etc., within which a set of instructions, for causing the machine to perform any one or more of the methodologies discussed herein, may be executed. In one implementation, the computing device 1000 may present an overlay UI to a user (as discussed above). In alternative implementations, the machine may be connected (e.g., networked) to other machines in a LAN, an intranet, an extranet, or the Internet. The machine may operate in the capacity of a server machine in client-server network environment. The machine may be a personal computer (PC), a set-top box (STB), a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computing device 1000 includes a processing device (e.g., a processor) 1002, a main memory 1004 (e.g., read-only memory (ROM), flash memory, dynamic random access memory (DRAM) such as synchronous DRAM (SDRAM)), a static memory 1006 (e.g., flash memory, static random access memory (SRAM)) and a data storage device 1018, which communicate with each other via a bus 1030.

Processing device 1002 represents one or more general-purpose processing devices such as a microprocessor, central processing unit, or the like. More particularly, the processing device 1002 may be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 1002 may also be one or more special-purpose processing devices such as an application specific integrated circuit (ASIC), a field programmable gate array (FPGA), a digital signal processor (DSP), network processor, or the like. The processing device 1002 is configured to execute instructions 1026 (e.g., instructions for an application ranking system) for performing the operations and steps discussed herein.

The computing device 1000 may further include a network interface device 1008 which may communicate with a network 1020. The computing device 1000 also may include a video display unit 1010 (e.g., a liquid crystal display (LCD) or a cathode ray tube (CRT)), an alphanumeric input device 1012 (e.g., a keyboard), a cursor control device 1014 (e.g., a mouse) and a signal generation device 1016 (e.g., a speaker). In one implementation, the video display unit 1010, the alphanumeric input device 1012, and the cursor control device 1014 may be combined into a single component or device (e.g., an LCD touch screen).

The data storage device 1018 may include a computer-readable storage medium 1028 on which is stored one or more sets of instructions 1026 (e.g., instructions for the application ranking system) embodying any one or more of the methodologies or functions described herein. The instructions 1026 may also reside, completely or at least partially, within the main memory 1004 and/or within the processing device 1002 during execution thereof by the computing device 1000, the main memory 1004 and the processing device 1002 also constituting computer-readable media. The instructions may further be transmitted or received over a network 1020 via the network interface device 1008.

While the computer-readable storage medium 1028 is shown in an example implementation to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methodologies of the present disclosure. The term "computer-readable storage medium" shall accordingly be taken to include, but not be limited to, solid-state memories, optical media and magnetic media. The term "computer-readable storage medium" does not include transitory signals.

In the above description, numerous details are set forth. It will be apparent, however, to one of ordinary skill in the art having the benefit of this disclosure, that implementations of the disclosure may be practiced without these specific details. Moreover, implementations are not limited to the exact order of some operations, and it is understood that some operations shown as two steps may be combined and some operations shown as one step may be split. In some instances, well-known structures and devices are shown in block diagram form, rather than in detail, in order to avoid obscuring the description.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "identifying," "determining," "calculating," "updating," "transmitting," "receiving," "generating," "changing," or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

Implementations of the disclosure also relate to an apparatus for performing the operations herein. This apparatus may be specially constructed for the required purposes, or it may comprise a general purpose computer selectively activated or reconfigured by a computer program stored in the computer. Such a computer program may be stored in a non-transitory computer readable storage medium, such as, but not limited to, any type of disk including floppy disks, optical disks, CD-ROMs and magnetic-optical disks, read-only memories (ROMs), random access memories (RAMs), EPROMs, EEPROMs, magnetic or optical cards, flash memory, or any type of media suitable for storing electronic instructions.

The words "example" or "exemplary" are used herein to mean serving as an example, instance, or illustration. Any aspect or design described herein as "example' or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one embodiment" or "an implementation" or "one implementation" throughout is not intended to mean the same embodiment or implementation unless described as such. Furthermore, the terms "first," "second," "third," "fourth," etc. as used herein are meant as labels to distinguish among different elements and may not necessarily have an ordinal meaning according to their numerical designation.

The algorithms and displays presented herein are not inherently related to any particular computer or other apparatus. Various general purpose systems may be used with programs in accordance with the teachings herein, or it may prove convenient to construct a more specialized apparatus to perform the required method steps. The required structure for a variety of these systems will appear from the description below. In addition, the present disclosure is not described with reference to any particular programming language. It will be appreciated that a variety of programming languages may be used to implement the teachings of the disclosure as described herein.

## Claims

1. A method for a computer system (100), the method comprising:
receiving (910) an account creation request (206) for a social media platform (102), the account creation request created and sent to the social media platform using a frontend component (106);
receiving (920), from the frontend component, an application programming interface [API] call sequence (200) associated with the account creation request, the API call sequence made to an API of the frontend component and reflecting API calls (204) registered by the frontend component in connection with creation of the account creation request, and timings of the registered API calls;
applying (930) an API call sequence model to the received API call sequence, the API call sequence model generated by providing training API call sequences (116) to a machine learning component (114); and
in response to the application of the API call sequence model indicating that the received API call sequence is anomalous, taking (940) at least one action with regard to the account creation request, or with regard to an account created in response to the account creation request.

2. The method of claim 1, wherein applying the API call sequence model comprises an evaluation of whether the received API call sequence is missing a particular API call of the frontend component.

3. The method of claim 2, wherein some of the training API call sequences correspond to valid account creation requests and others of the training API call sequences correspond to invalid account creation requests, and wherein the particular API call is identified for use in the evaluation based on the particular API call having a greater frequency of occurrence for the valid account creation requests than for the invalid account creation requests.

4. The method of claim 2, further comprising, in response to determining that the received API call sequence is missing the particular API call of the frontend component, evaluating whether the received API call sequence is missing another particular API call of the frontend component.

5. The method of claim 1, wherein applying the API call sequence model comprises evaluating the timing of the API calls; and optionally wherein evaluating the timing of the API calls comprises:
determining whether a temporal separation of the API calls is less than a threshold; and/or
determining whether a temporal separation of the API calls is randomized.

6. The method of claim 1, wherein applying the API call sequence model comprises counting the API calls in the received API call sequence.

7. The method of claim 1, wherein multiple API call sequences are received, the multiple API call sequences corresponding to respective account creation requests, the method further comprising storing the received API call sequences in a log, and evaluating the log to determine whether any of the received API call sequences are essentially identical to each other.

8. The method of claim 1, wherein the account is created in response to the account creation request, the method further comprising:
receiving engagement data regarding the account, the engagement data reflecting use of the frontend component to interact with the social media platform;
applying an engagement model to the received engagement data, the engagement model generated by providing training engagement data to the machine learning component; and
in response to the application of the engagement model indicating that the use of the frontend component is anomalous, taking at least one action with regard to the account.

9. The method of claim 1, wherein applying the API call sequence model comprises determining a score for the received API call sequence, wherein the application of the API call sequence model indicates that the received API call sequence is anomalous in response to the determined score not meeting a threshold for account creation normalcy.

10. The method of claim 1, wherein the connection between the API calls and the creation of the account creation request comprises that at least one of the API calls was registered by the frontend component during a predefined period of time after the account generation request was generated.

11. The method of claim 1, wherein taking the at least one action comprises attempting to contact a person associated with the account generation request, and determining whether the account generation request was generated by a script interacting with the frontend component.

12. The method of claim 1, further comprising:
receiving additional training API call sequences after applying the API call sequence model to the received API call sequence;
generating an updated API call sequence model by providing the additional training API call sequences to the machine learning component;
receiving another account creation request for the social media platform after generating the updated API call sequence model;
applying the updated API call sequence model to the received other API call sequence; and
in response to the application of the updated API call sequence model indicating that the received other API call sequence is anomalous, taking at least one action with regard to the other account creation request, or with regard to an other account created in response to the other account creation request; and optionally
applying the updated API call sequence model to a previous account creation request, including at least the received account creation request.

13. A computer program comprising instructions that when executed cause at least one processor to perform the method of any preceding claim.

14. A computer system comprising:
an interface configured to receive an account creation request for a social media platform, the account creation request created and sent to the computer system using a frontend component, the interface also configured to receive an application programming interface (API) call sequence associated with the account creation request, the API call sequence reflecting API calls made to an API of the frontend component and registered by the frontend component in connection with creation of the account creation request, and timings of the registered API calls;
a log in which the computer system records received API call sequences; and
a bot configured to apply an API call sequence model to at least the received API call sequence record in the log, the API call sequence model generated by providing training API call sequences to a machine learning component, wherein in response to the bot indicating that the received API call sequence is anomalous, the computer system takes at least one action with regard to the account creation request, or with regard to an account created in response to the account creation request.

15. The computer system of claim 14, wherein in applying the API call sequence model the bot evaluates the timing of the API calls; and optionally wherein in evaluating the timing of the API calls:
the bot determines whether a temporal separation of the API calls is less than a threshold; and/or
the bot determines whether a temporal separation of the API calls is randomized.

## Patentansprüche

1. Verfahren für ein Computersystem (100), wobei das Verfahren umfasst:
Empfangen (910) einer Kontoerstellungsanforderung (206) für eine Social-Media-Plattform (102), wobei die Kontoerstellungsanforderung unter Verwendung einer Frontend-Komponente (106) erstellt und an die Social Media-Plattform gesendet wird;
Empfangen (920), von der Frontend-Komponente, einer Anwendungsprogrammierschnittstellen (API) -Aufrufsequenz (200), die der Kontoerstellungsanforderung zugeordnet ist, wobei die API-Aufrufsequenz an eine API der Frontend-Komponente erfolgte und API-Aufrufe (204), die von die Frontend-Komponente im Zusammenhang mit der Erstellung der Kontoerstellungsanforderung registriert wurden, und Zeitpunkte der registrierten API-Aufrufe wiederspiegelt;
Anwenden (930) eines API-Aufrufsequenzmodells auf die empfangene API-Aufrufsequenz, wobei das API-Aufrufsequenzmodell durch Bereitstellen von Trainings-API-Aufrufsequenzen (116) für eine Maschinenlernkomponente (114) generiert wird; und
als Reaktion auf die Anwendung des API-Aufrufsequenzmodells, das angibt, dass die empfangene API-Aufrufsequenz anomal ist, Ausführen (940) mindestens einer Maßnahme in Bezug auf die Kontoerstellungsanforderung oder in Bezug auf ein Konto, das als Reaktion auf die Kontoerstellungsanforderung erstellt wurde.

2. Verfahren nach Anspruch 1, wobei das Anwenden des API-Aufrufsequenzmodells eine Beurteilung umfasst, ob der empfangenen API-Aufrufsequenz ein bestimmter API-Aufruf der Frontend-Komponente fehlt.

3. Verfahren nach Anspruch 2, wobei einige der Trainings-API-Aufrufsequenzen gültigen Kontoerstellungsanforderungen entsprechen und andere der Trainings-API-Aufrufsequenzen ungültigen Kontoerstellungsanforderungen entsprechen und wobei der bestimmte API-Aufruf zur Verwendung in der Beurteilung basierend auf dem bestimmten API-Aufruf identifiziert wird, der bei den gültigen Kontoerstellungsanforderungen häufiger auftritt auf als bei den ungültigen Kontoerstellungsanforderungen.

4. Verfahren nach Anspruch 2, ferner umfassend, als Reaktion auf das Bestimmen, dass der empfangenen API-Aufrufsequenz der bestimmte API-Aufruf der Frontend-Komponente fehlt, das Beurteilen, ob der empfangenen API-Aufrufsequenz ein anderer bestimmter API-Aufruf der Frontend-Komponente fehlt.

5. Verfahren nach Anspruch 1, wobei das Anwenden des API-Aufrufsequenzmodells das Beurteilen des Zeitpunkts der API-Aufrufe umfasst; und optional wobei das Beurteilen des Zeitpunkts der API-Aufrufe umfasst:
Bestimmen, ob eine zeitliche Trennung der API-Aufrufe kleiner als ein Schwellenwert ist;
und/oder
Bestimmen, ob eine zeitliche Trennung der API-Aufrufe zufällig erfolgt.

6. Verfahren nach Anspruch 1, wobei das Anwenden des API-Aufrufsequenzmodells das Zählen der API-Aufrufe in der empfangenen API-Aufrufsequenz umfasst.

7. Verfahren nach Anspruch 1, wobei mehrere API-Aufrufsequenzen empfangen werden, wobei die mehreren API-Aufrufsequenzen den jeweiligen Kontoerstellungsanforderungen entsprechen, wobei das Verfahren ferner das Speichern der empfangenen API-Aufrufsequenzen in einem Protokoll und das Beurteilen des Protokolls umfasst, um zu bestimmen, ob irgendwelche der empfangenen API-Aufrufsequenzen im Wesentlichen miteinander identisch sind.

8. Verfahren nach Anspruch 1, wobei das Konto als Reaktion auf die Kontoerstellungsanforderung erstellt wird, wobei das Verfahren ferner umfasst:
Empfangen von Engagement-Daten in Bezug auf das Konto, wobei die Engagement-Daten die Verwendung der Frontend-Komponente zur Interaktion mit der Social-Media-Plattform widerspiegeln;
Anwenden eines Engagement-Modells auf die empfangenen Engagement-Daten, wobei das Engagement-Modell durch Bereitstellen von Training-Engagement-Daten für die Maschinenlernkomponente generiert wird; und
als Reaktion auf die Anwendung des Engagement-Modells, das angibt, dass die Verwendung der Frontend-Komponente anomal ist, Ausführen von mindestens einer Maßnahme in Bezug auf das Konto.

9. Verfahren nach Anspruch 1, wobei das Anwenden des API-Aufrufsequenzmodells das Bestimmen einer Bewertung für die empfangene API-Aufrufsequenz umfasst, wobei die Anwendung des API-Aufrufsequenzmodells anzeigt, dass die empfangene API-Aufrufsequenz als Reaktion darauf, dass die bestimmte Bewertung einen Schwellenwert für Kontoerstellungsnormalität nicht erreicht, anomal ist.

10. Verfahren nach Anspruch 1, wobei die Verbindung zwischen den API-Aufrufen und der Erstellung der Kontoerstellungsanforderung umfasst, dass mindestens einer der API-Aufrufe von der Frontend-Komponente während eines vordefinierten Zeitraums nach dem Generieren der Kontogenerierungsanforderung registriert wurde.

11. Verfahren nach Anspruch 1, wobei das Ausführen der mindestens einen Maßnahme das Versuchen, eine Person zu kontaktieren, die der Kontogenerierungsanforderung zugeordnet ist, und das Bestimmen, ob die Kontogenerierungsanforderung durch ein Skript generiert wurde, das mit der Frontend-Komponente interagiert, umfasst.

12. Verfahren nach Anspruch 1, ferner umfassend:
Empfangen zusätzlicher Trainings-API-Aufrufsequenzen nach Anwenden des API-Aufrufsequenzmodells auf die empfangene API-Aufrufsequenz;
Generieren eines aktualisierten API-Aufrufsequenzmodells durch Bereitstellen der zusätzlichen Trainings-API-Aufrufsequenzen für die Maschinenlernkomponente;
Empfangen einer weiteren Kontoerstellungsanforderung für die Social-Media-Plattform nach dem Generieren des aktualisierten API-Aufrufsequenzmodells;
Anwenden des aktualisierten API-Aufrufsequenzmodells auf die empfangene andere API-Aufrufsequenz; und
als Reaktion auf die Anwendung des aktualisierten API-Aufrufsequenzmodells, Angeben, dass die empfangene API-Aufrufsequenz anomal ist, Ausführen mindestens einer Maßnahme in Bezug auf die andere Kontoerstellungsanforderung oder in Bezug auf ein anderes Konto, das als Reaktion auf die andere Kontoerstellungsanforderung erstellt wurde; und optional
Anwenden des aktualisierten API-Aufrufsequenzmodells auf eine vorherige Kontoerstellungsanforderung, einschließlich mindestens der empfangenen Kontoerstellungsanforderung.

13. Computerprogramm, umfassend Anweisungen, die bei Ausführung dazu führen, dass mindestens ein Prozessor das Verfahren nach einem der vorhergehenden Ansprüche ausführt.

14. Computersystem, umfassend:
eine Schnittstelle, die zum Empfangen einer Kontoerstellungsanforderung für eine Social-Media-Plattform konfiguriert ist, wobei die Kontoerstellungsanforderung unter Verwendung einer Frontend-Komponente erstellt und an das Computersystem gesendet wird, wobei die Schnittstelle auch zum Empfangen einer der Kontoerstellungsanforderung zugeordneten Anwendungsprogrammierschnittstellen (API) -Aufrufsequenz konfiguriert ist, wobei die API-Aufrufsequenz API-Aufrufe, die an eine API der Frontend-Komponente erfolgten und von der Frontend-Komponente im Zusammenhang mit der Erstellung der Kontoerstellungsanforderung registriert wurden, und Zeitpunkte der registrierten API-Aufrufe widerspiegelt;
ein Protokoll, in dem das Computersystem empfangene API-Aufrufsequenzen aufzeichnet; und
ein Bot, der zum Anwenden eines API-Aufrufsequenzmodells auf mindestens die empfangene API-Aufrufsequenzaufzeichung im Protokoll konfiguriert ist, wobei das API-Aufrufsequenzmodell durch Bereitstellen von Trainings-API-Aufrufsequenzen für eine Maschinenlernkomponente generiert wird, wobei als Reaktion darauf, dass der Bot angibt, dass die empfangene API-Aufrufsequenz anomal, ist, das Computersystem mindestens eine Maßnahme in Bezug auf die Kontoerstellungsanforderung oder in Bezug auf ein als Reaktion auf die Kontoerstellungsanforderung erstelltes Konto ausführt.

15. Computersystem nach Anspruch 14, wobei bei Anwendung des API-Aufrufsequenzmodells der Bot den Zeitpunkt der API-Aufrufe beurteilt; und optional wobei bei Beurteilung des Zeitpunkts der API-Aufrufe:
der Bot bestimmt, ob eine zeitliche Trennung der API-Aufrufe unter einem Schwellenwert liegt; und/oder
der Bot bestimmt, ob eine zeitliche Trennung der API-Aufrufe zufällig erfolgt.

## Revendications

1. Procédé destiné à un système informatique (100), le procédé comprenant :
la réception (910) d'une demande de création de compte (206) pour une plate-forme de réseau social (102), la demande de création de compte créée et envoyée à la plate-forme de réseau social à l'aide d'un composant d'interface (106) ;
la réception (920), en provenance du composant d'interface, d'une séquence d'appel (200) d'interface de programmation d'application [API] associée à la demande de création de compte, la séquence d'appel API effectuée envers une API du composant d'interface et reflétant les appels d'API (204) enregistrés par le composant d'interface en relation avec la création de la demande de création de compte et les position dans le temps des appels d'API enregistrés ;
l'application (930) d'un modèle de séquence d'appel d'API à la séquence d'appel d'API reçue, le modèle de séquence d'appel d'API généré en fournissant des séquences d'appels d'API d'apprentissage (116) à un composant d'apprentissage automatique (114) ; et
en réponse à l'application du modèle de séquence d'appel d'API indiquant que la séquence d'appel d'API reçue est anormale, la prise (940) d'au moins une mesure concernant la demande de création de compte, ou concernant un compte créé en réponse à la demande de création de compte.

2. Procédé selon la revendication 1, ladite application du modèle de séquence d'appel d'API comprenant une évaluation pour savoir si la séquence d'appels d'API reçue manque un appel d'API particulier du composant d'interface.

3. Procédé selon la revendication 2, certaines des séquences d'appel d'API d'apprentissage correspondant à des demandes de création de compte valides et d'autres des séquences d'appel d'API d'apprentissage correspondant à des demandes de création de compte invalides, et ledit appel d'API particulier étant identifié pour être utilisé dans l'évaluation sur la base de l'appel d'API particulier qui possède une fréquence d'occurrence plus grande pour les demandes de création de compte valides que pour les demandes de création de compte invalides.

4. Procédé selon la revendication 2, comprenant en outre, en réponse à la détermination que la séquence d'appel d'API reçue manque l'appel d'API particulier du composant d'interface, l'évaluation pour savoir si la séquence d'appel API reçue manque un autre appel d'API particulier du composant d'interface.

5. Procédé selon la revendication 1, ladite application du modèle de séquence d'appel d'API comprenant l'évaluation de la temporisation des appels d'API ; et éventuellement ladite évaluation de la position dans le temps des appels d'API comprenant :
la détermination pour savoir si une séparation temporelle des appels d'API est inférieure à un seuil ;
et/ou
la détermination pour savoir si une séparation temporelle des appels d'API est aléatoire.

6. Procédé selon la revendication 1, ladite application du modèle de séquence d'appel d'API comprenant le comptage des appels d'API dans la séquence d'appel d'API reçue.

7. Procédé selon la revendication 1, de multiples séquences d'appels d'API étant reçues, les multiples séquences d'appels d'API correspondant aux demandes de création de compte respectives, le procédé comprenant en outre le stockage des séquences d'appel d'API reçues dans un journal et l'évaluation du journal pour déterminer si toutes les séquences d'appel API reçues sont essentiellement identiques les unes aux autres.

8. Procédé selon la revendication 1, ledit compte étant créé en réponse à la demande de création de compte, le procédé comprenant en outre :
la réception des données d'engagement concernant le compte, les données d'engagement reflétant l'utilisation du composant d'interface pour interagir avec la plateforme de réseau social ;
l'application d'un modèle d'engagement aux données d'engagement reçues, le modèle d'engagement étant généré en fournissant des données d'engagement d'apprentissage au composant d'apprentissage automatique ; et
en réponse à l'application du modèle d'engagement indiquant que l'utilisation du composant d'interface est anormale, la prise d'au moins une mesure à l'égard du compte.

9. Procédé selon la revendication 1, ladite application du modèle de séquence d'appel d'API comprenant la détermination d'un score pour la séquence d'appel d'API reçue, ladite application du modèle de séquence d'appel d'API indiquant que la séquence d'appel d'API reçue est anormale en réponse au score déterminé qui ne satisfait pas un seuil de normalité de création de compte.

10. Procédé selon la revendication 1, ladite connexion entre les appels d'API et la création de la demande de création de compte comprenant qu'au moins l'un des appels d'API a été enregistré par le composant d'interface durant une période de temps prédéfinie après la génération de la demande de génération de compte.

11. Procédé selon la revendication 1, ladite prise de la au moins une mesure comprenant la tentative de contacter une personne associée à la demande de génération de compte, et la détermination pour savoir si la demande de génération de compte a été générée par un script interagissant avec le composant d'interface.

12. Procédé selon la revendication 1, comprenant en outre :
la réception de séquences d'appel d'API d'apprentissage supplémentaires après l'application du modèle de séquence d'appel d'API à la séquence d'appel d'API reçue ;
la génération d'un modèle de séquence d'appel d'API mis à jour en fournissant les séquences d'appel d'API d'apprentissage supplémentaires au composant d'apprentissage automatique ;
la réception d'une autre demande de création de compte pour la plateforme de réseau social après la génération du modèle de séquence d'appel d'API mis à jour ;
l'application du modèle de séquence d'appel d'API mis à jour à l'autre séquence d'appel d'API reçue ; et
en réponse à l'application du modèle de séquence d'appel d'API mis à jour indiquant que l'autre séquence d'appel d'API reçue est anormale, la prise d'au moins une mesure en ce qui concerne l'autre demande de création de compte, ou en ce qui concerne un autre compte créé en réponse à l'autre demande de création de compte ; et éventuellement
l'application du modèle de séquence d'appel d'API mis à jour à une demande de création de compte précédente, comprenant au moins la demande de création de compte reçue.

13. Programme informatique comprenant des instructions qui, lorsqu'elles sont exécutées, amènent au moins un processeur à effectuer le procédé selon l'une quelconque des revendications précédentes.

14. Système informatique comprenant :
une interface configurée pour recevoir une demande de création de compte pour une plateforme de réseau social, la demande de création de compte créée et envoyée au système informatique à l'aide d'un composant d'interface, l'interface également configurée pour recevoir une séquence d'appels d'interface de programmation d'application (API) associée au compte la demande de création, la séquence d'appel d'API reflétant les appels d'API effectué à une API du composant d'interface et enregistrés par le composant d'interface en relation avec la création de la demande de création de compte, et les positions dans le temps des appels d'API enregistrés ;
un journal dans lequel le système informatique enregistre les séquences d'appel d'API reçues ; et
un bot informatique configuré pour appliquer un modèle de séquence d'appel d'API à au moins l'enregistrement de séquence d'appel d'API reçu dans le journal, le modèle de séquence d'appel d'API étant généré en fournissant des séquences d'appel d'API d'apprentissage à un composant d'apprentissage automatique, en réponse au bot informatique indiquant que la séquence d'appel d'API reçue est anormale, le système informatique prenant au moins une mesure en ce qui concerne la demande de création de compte, ou en ce qui concerne un compte créé en réponse à la demande de création de compte.

15. Système informatique selon la revendication 14, en appliquant le modèle de séquence d'appel d'API, ledit bot informatique évaluant la position dans le temps d'appels d'API ; et éventuellement lors de l'évaluation de la position dans le temps des appels d'API :
ledit bot informatique déterminant si une séparation temporelle des appels d'API est inférieure à un seuil ; et/ou
ledit bot informatique déterminant si une séparation temporelle des appels d'API est aléatoire.
